Europäisches Patentamt

European Patent Office

Office européen des brevets

(19)

(11) EP 1 129 053 B1

(12) EUROPÄISCHE PATENTSCHRIFT

(45) Veröffentlichungstag und Bekanntmachung des Hinweises auf die Patenterteilung:
26.05.2004 Patentblatt 2004/22

(51) Int Cl.7: **C06B 31/28**, C01C 1/18

(21) Anmeldenummer: **99947325.9**

(86) Internationale Anmeldenummer:
**PCT/EP1999/006746**

(22) Anmeldetag: **11.09.1999**

(87) Internationale Veröffentlichungsnummer:
**WO 2000/018704 (06.04.2000 Gazette 2000/14)**

(54) **VERFAHREN ZUR HERSTELLUNG VON PHASENSTABILISIERTEM AMMONIUMNITRAT**

PROCESS FOR PRODUCING PHASE-STABILIZED AMMONIUM NITRATE

PROCEDE POUR PRODUIRE DU NITRATE D'AMMONIUM A PHASES STABILISEES

(84) Benannte Vertragsstaaten:
**AT BE CH CY DE DK ES FI FR GB GR IE IT LI LU MC NL PT SE**

(30) Priorität: **28.09.1998 DE 19844350**

(43) Veröffentlichungstag der Anmeldung:
**05.09.2001 Patentblatt 2001/36**

(73) Patentinhaber: **Fraunhofer-Gesellschaft zur Förderung der angewandten Forschung e.V. 80686 München (DE)**

(72) Erfinder:
• **ENGEL, Walter**
**D-76327 Wöschbach (DE)**
• **HEINISCH, Herbert**
**D-76275 Ettlingen (DE)**

(56) Entgegenhaltungen:
**DE-A- 2 125 755**     **DE-B- 1 646 327**

• **CHEMICAL ABSTRACTS, vol. 129, no. 9, 31. August 1998 (1998-08-31) Columbus, Ohio, US; abstract no. 110945b, P.B. KEMPA ET AL.: "Dilatometric measurements of phase-stabilized ammonium nitrate (CuPSAN) performed by x-ray diffraction" Seite 811; XP000789692 & Int. Annu. Conf. ICT 1998, 29th(Energetic Materials), 73.1-73.11**
• **CHEMICAL ABSTRACTS, vol. 120, no. 24, 13. Juni 1994 (1994-06-13) Columbus, Ohio, US; abstract no. 302684b, W. ENGEL ET AL.: "Ammonium nitrate, a less polluting oxidizer." Seite 234; XP000664046 & Int. Annu. Conf. ICT 1993, 24th(Energetic Materials: Insensitivity and Environmental Awareness), 3-1/3-9**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Herstellung von phasenstabilisiertem partikelförmigem Ammoniumnitrat (AN) durch Einbau eines Diamminkomplexes der Metalle Kupfer, Nickel oder Zink in das Kristallgitter des AN, wobei das AN mit anorganischen Kupfer-, Nickel- und/oder Zink-Verbindungen aufgeschmolzen und zur Umsetzung gebracht wird.

Ammoniumnitrat wird als Oxidator in Treib- und Explosivstoffen, in Gasgeneratoren, in Raketen und neuerdings auch für Airbags eingesetzt. Während AN bei langsamer Erwärmung bei Temperaturen oberhalb seines Schmelzpunktes von 169,5°C in Wasser und Distickstoffoxid zerfällt, kann die Zersetzung bei höheren Temperaturen oder sprunghafter Erwärmung (exotherm) unter Freisetzung von Sauerstoff, Stickstoff und Stickoxiden als Detonation verlaufen.

Reines AN liegt in Abhängigkeit von der Temperatur in fünf verschiedenen Kristallmodifikationen vor, nämlich im Temperaturintervall zwischen 125°C und seinem Schmelzpunkt von 169,5°C kubisch (Modifikation I), im Temperaturintervall zwischen 84°C und 125°C bei einer Dichte von ca. 1,67 g/cm$^3$ tetragonal (Modifikation II), im Temperaturintervall von 32°C bis 84°C bei einer Dichte von ca. 1,66 g/cm$^3$ orthorhombisch (Modifikation III), zwischen -18°C und 32°C ebenfalls orthorhombisch (Modifikation IV), aber mit einer Dichte von ca. 1,73 g/cm$^3$, was einer Dichteänderung von ca. 4% gegenüber der Dichte der Modifikation III entspricht, und bei Temperaturen unterhalb -18°C orthorhombisch pseudotretagonal (Modifikation V). Hierbei sind die Modifikationen II und V sowohl in ihrer Dichte als auch in ihrer Gitterstruktur sehr ähnlich und liefern beispielsweise bei Röntgenbeugungsmessungen nahezu identische Diagramme.

Insbesondere der Dichteunterschiede zwischen den Modifikationen III und IV bei der Erwärmung von AN auf Temperaturen oberhalb 32°C führt zu Spannungen und Rißbildungen im Gefüge der AN als Oxidator enthaltenden, geformten Treibsätze.

Zur Phasenstabilisierung von AN sind Zusätze unterschiedlicher Art vorgeschlagen worden. So ist es beispielsweise bekannt, unter Zusatz von Alkalinitraten, wie Kaliumnitrat, die Modifikation III im Temperaturintervall zwischen -20°C und 100°C zu stabilisieren, jedoch neigen die mit Nitraten versetzten AN-Partikel zum Zusammenbacken und sind somit nur schlecht fließfähig und in Mischungen schlecht homogenisierbar (US 3 018 164). Zudem wird die Modifikation III durch den Zusatz von Kaliumnitrat insbesondere bei Abkühlung eines mit Kaliumnitrat versetzten AN auf Temperaturen unterhalb etwa -30°C nicht ausreichend stabilisiert.

Eine in der Praxis bewährte Phasenstabilisierung der ähnlichen Modifikationen II und V sowie der Modifikation IV in einem Temperaturintervall von etwa -100°C bis 100°C wird durch den Zusatz von Metallammoniakaten (Metall-Amminkomplexen) erreicht und hierunter vornehmlich von Amminkomplexen der Metalle Kupfer, Nickel und Zink (DE 17 67 757 A1, DE 21 25 755 C3, EP 0 405 272 B1).

Die Herstellung der Metall-Amminkomplexe bzw. der Einbau in das Kristallgitter des AN gelingt beispielsweise durch Aufschmelzen einer Mischung von AN und Metalloxid (DE 21 25 755 C3). Hierbei wird das AN mit bis zu 10% des Metalloxids gemischt, aufgeschmolzen und dann die Schmelze in den festen Zustand überführt. Dieses Verfahren hat den Nachteil, daß der Amminkomplex nur unzureichend in das AN-Gitter eingebaut wird, da die Umsetzung von Metalloxid und AN sehr langsam abläuft und der Amminkomplex sich bei erhöhter Temperatur, nämlich der Schmelztemperatur von Ammoniumnitrat, zersetzt. Bildungshäufigkeit und gleichzeitige Zersetzung stehen also in Konkurrenz miteinander und Reste an nicht umgesetzten Metalloxiden, welche den Abbrand des Ammoniumnitrats negativ beeinflussen, verbleiben im phasenstabilisierten Produkt.

Aus der EP 0 405 272 B1 ist ein Verfahren bekannt, bei dem der Diamminkomplex durch Umsetzung des Metalloxids mit AN in einer Festkörperreaktion bei 110°C bis 170°C hergestellt wird. Auch dieses Verfahren ist aufwendig und teuer, da die Diffussionsgeschwindigkeit der Festkörperreaktion niedrig ist und Reste von nicht umgesetzten Metalloxiden im AN verbleiben. Beides führt zu einem inhomogenen Produkt.

Die DE 36 42 850 Cl beschreibt ein Verfahren, bei dem das AN im geschmolzenen Zustand mit Kupfer- und/oder Nickeloxid unter Bildung der jeweiligen Diamminkomplexe versetzt wird (Gleichungen 1 und 2).

$$2\ NH_4NO_3 + CuO \rightarrow [Cu(NH_3)_2]^{2+} + 2\ NO_3^- + H_2O \qquad (1)$$

$$2\ NH_4NO_3 + NiO \rightarrow [Ni(NH_3)_2]^{2+} + 2\ NO_3^- + H_2O \qquad (2)$$

Die Schmelze muß aus sicherheitstechnischen Gründen in kleinen, räumlich getrennt untergebrachten Chargen angesetzt werden, um anschließend in einer Sprühzerstäubung zu sphärischen phasenstabilisierten AN-Partikeln verarbeitet zu werden.

Gemäß der US 5 071 630 A1 wird anstelle von Kupfer- und/oder Nickeloxid Zinkoxid zur Bildung des Diamminkomplexes verwendet. Dem AN wird in der schmelzflüssigen Phase Zinkoxid zugesetzt, die Schmelze mit Inertgas getrocknet und mit Ammoniak beaufschlagt, um das bei der Trocknung ausgetragene $NH_3$ zu ersetzen. Anschließend wird die Schmelze gegebenenfalls in reinem Ammoniumnitrat gelöst und das erhaltene Produkt abgekühlt und granuliert.

Nachteilig sind auch hierbei die Metalloxide (CuO, NiO und ZnO), da sie nur langsam mit dem AN reagieren und der gebildete Diamminkomplex sich bei Temperaturen oberhalb der Schmelztemperatur von AN zu zersetzen beginnt. Dadurch verbleiben stets geringe Mengen an nicht umgesetztem Nickeloxid bzw. Kupferoxid im Produkt, die das Abbrandverhalten des AN negativ beeinflussen. Im Reaktionsbehälter setzen sich die Metalloxide ab, so daß die Produktionsanlage häufig gereinigt werden muß, um die abgesetzten Oxide nicht in die nächste Charge zu verschleppen. Darunter leidet die Wirtschaftlichkeit des Verfahrens. Weiterhin sind Kontaminationen, insbesondere des toxischen Nickeloxids, nicht auszuschließen.

Der Erfindung liegt die Aufgabe zugrunde, das bekannte Verfahren dahingehend zu verbessern, daß die zur Bildung des Diamminkomplexes erforderliche Reaktionszeit verkürzt, die Verunreinigung des Produktes durch nicht umgesetzte Metalloxide vermieden und somit neben einer qualitativen Verbesserung des Produktes eine wirtschaftlichere Herstellung möglich wird.

Erfindungsgemäß wird diese Aufgabe mit dem eingangs genannten Verfahren dadurch gelöst, daß als anorganische Verbindungen der Metalle Kupfer, Nickel und/oder Zink Carbonate und/oder Hydroxidcarbonate und/oder Hydroxide und/oder Hydroxidnitrate zugesetzt werden.

Mit den erfindungsgemäßen Verbindungen, deren Toxizität deutlich geringer ist als die der entsprechenden Oxide, wird ein Umsatz von nahezu 100% bei erheblich kürzerer Reaktionszeit erreicht, so daß keine Reste der Verbindungen im Produkt und im Reaktionsbehälter verbleiben. Es wird ein hochreines phasenstabilisiertes AN mit genauer Spezifikation erhalten.

Während der Diamminkomplex von Nickel (II) die Modifikation IV von AN stabilisiert, stabilisieren die Diamminkomplexe von Kupfer (II) bzw. Zink (II) die Modifikationen II bzw. V. In jedem Fall ist die derart stabilisierte Modifikation des AN in einem großen Temperaturintervall von etwa -100°C bis 70°C stabil.

Der durch den erfindungsgemäßen Zusatz der Kupfer-, Nickel- oder Zinkcarbonate, -hydroxidcarbonate, -hydroxide oder -hydroxidnitrate erzielte hohe Umsatz begründet sich mit dem speziellen Reaktionsverhalten der Carbonat- bzw. Hydroxidanionen sowie mit deren im Vergleich mit den entsprechenden Metalloxiden geringeren Stabilität aufgrund einer geringeren Gitterenergie. Die Carbonat- bzw. Hydroxidanionen reagieren unter Freisetzung von Ammoniak spontan mit dem Ammoniumion des AN (Gleichungen 3 und 4).

$$OH^- + NH_4^+ \rightarrow NH_3 + H_2O \tag{3}$$

$$CO_3^{2-} + 2\,NH_4^+ \rightarrow 2\,NH_3 + CO_2 \tag{4}$$

Der entstehende Ammoniak wiederum reagiert mit den jeweiligen Kationen der Metalle Cu, Ni oder Zn unter Bildung des Diamminkomplexes.

Die Bruttoreaktionen der eingesetzten Hydroxide, Carbonate sowie Hydroxidcarbonate mit AN sind in den Gleichungen 5 bis 7 exemplarisch für das Kation Kupfer zusammengefaßt.

$$2\,NH_4NO_3 + Cu(OH)_2 \rightarrow [Cu(NH_3)_2]^{2+} + 2\,NO_3^- + 2\,H_2O \tag{5}$$

$$2\,NH_4NO_3 + CuCO_3 \rightarrow [Cu(NH_3)_2]^{2+} + 2\,NO_3^- + CO_2 + H_2O \tag{6}$$

$$4\,NH_4NO_3 + Cu(OH)_2 \cdot CuCO_3 \rightarrow 2\,[Cu(NH_3)_2]^{2+} + 4\,NO_3^- + CO_2 + 3\,H_2O \tag{7}$$

Da Kupfercarbonat (Gleichung 6) in Reinform nur schwer erhältlich ist, können auch Doppelsalze, wie $CuCO_3 \cdot K_2CO_3$ eingesetzt werden. Anstelle reiner Hydroxide können auch Hydroxidnitrate, wie $3\,Cu(OH)_2 \cdot Cu(NO_3)_2$, $Ni(OH)_2 \cdot Ni(NO_3)_2 \cdot 6\,H_2O$ oder
$4\,Zn(OH)_2 \cdot Zn(NO_3) \cdot 2\,H_2O$ zugesetzt werden. Hierbei wird das AN nicht mit einem Fremdanion verunreinigt.

In einer weiterhin bevorzugten Ausführungsform ist vorgesehen, daß dann, wenn die Reaktion von AN mit den erfindungsgemäßen Zusätzen zur Phasenstabilisierung in der flüssigen Phase erfolgen soll, Additive zur Erniedrigung der Schmelztemperatur des AN zugesetzt werden, um die Explosionsgefahr und die Aufheizzeit zu verringern. Der Prozeß kann dann in einem einzigen, gegebenenfalls auch großvolumigen Reaktionsbehälter, wie z.B. beheizbaren Knetern, Scheckenmischern oder Drehrohröfen, durchgeführt werden und muß nicht aus Sicherheitsgründen in mehreren kleinen Chargen parallel oder hintereinander durchgeführt werden. Der Chargenwechsel läßt sich erheblich beschleunigen, da die Anlagenteile nicht von verunreinigenden Sedimenten gesäubert werden müssen. Das erfindungsgemäße Verfahren läßt sich bei entsprechender Anlagentechnik sogar kontinuierlich durchführen.

Während in bevorzugter Ausführung Additive zugesetzt werden können, die den Schmelzpunkt des AN gemäß den Raoultschen Gesetzen erniedrigen, können insbesondere solche Additive vorgesehen werden, die in geringen Konzentrationen in der AN-Schmelze ein eutektisches Gemisch bilden, um im eutektischen Bereich einen niedrigeren Schmelzpunkt als den der reinen Substanzen zu nutzen.

Vorzugsweise werden Wasser und/oder Metallnitrate zugegeben. Der Vorteil von Wasser liegt in dessen Verflüchtigung beispielsweise während eines Zerstäubens in einem Kühlgassinkstrom. Der Vorteil von Metallnitraten liegt in der Tatsache begründet, daß das Ammoniumnitrat lediglich mit dem Kation des zugesetzten Metallnitrats verunreinigt wird, falls als Kation ein anderes Kation als die zur Phasenstabilisierung des AN in Form von Carbonaten, Hydroxidcarbonaten und/oder Hydroxiden zugesetzten Kationen Kupfer, Nickel oder Zink gewählt wird. Aus diesem Grund ist insbesondere der Einsatz von Kupfer-, Nickel- oder Zinknitrat vorgesehen. Wird die Qualität des phasenstabilisierten AN durch die Anwesenheit weiterer Kationen nicht beeinträchtigt, so können auch andere Nitrate, beispielsweise Alkali- oder Erdalkalinitrate, wie $NaNO_3$, $Ca(NO_3)_2$ oder $Mg(NO_3)_2$ zugesetzt werden.

Während die Hydroxide, Carbonate oder Hydroxidcarbonate der Metalle Kupfer, Nickel oder Zink in einer dem gewünschten Anteil des Diamminkomplexes im Produkt entsprechenden Menge zugegeben werden, kann die Menge der den Schmelzpunkt absenkenden Substanzen gegebenenfalls gering sein. So liegen z.B. die Anteile des Diamminkomplexes bei einem phasenstabilisierten AN für den Einsatz in Gasgeneratoren von Raketen bei 2 bis 5 Mass.-%, bei dem Einsatz als Treibmittel für Airbags aber bei bis zu 50 Mass.-%.

Nachstehend ist die Erfindung anhand von Beispielen erläutert:

Beispiel 1

48,5kg AN und 2,1 kg $Cu(OH)_2 \cdot CuCO_3$ werden gemischt und in einem Schmelzkessel aufgeschmolzen. Unmittelbar nach dem Erreichen einer Temperatur von 180°C in der Schmelze wird diese in einem Kühlgassinkstrom versprüht. Die Schmelztropfen erstarren zu runden Teilchen, die zur Phasenstabilisierung den in das Ammoniumnitratgitter eingebauten Diamminnickel(II)-Komplex enthalten. Je nach Einstellung der Sprühparameter werden mittlere Korngrößen von 20 bis 300 μm erhalten. Das Produkt, welches gegebenenfalls mit bis zu 1% Hilfsstoffen, wie Antibackmitteln, versetzt werden kann, wird zur Herstellung von Festtreibstoffen eingesetzt.

Das derart phasenstabilisierte Ammoniumnitrat wurde qualitativ mittels einer naßchemischen Spurenanalyse auf nicht umgesetztes Kupferhydroxidcarbonat untersucht, wobei kein Kupferhydroxidcarbonat nachgewiesen werden konnte.

Beispiel 2

38,8 kg AN und 2,0 kg Nickelhydroxidcarbonat $NiCO_3 \cdot 2\,Ni(OH)_2 \cdot 4\,H_2O$ werden gemischt und in einem Kessel aufgeheizt. Zur Schmelzpunkterniedrigung werden 1,2 l Wasser entsprechend 3 Gew.-% zugegeben. Bereits bei 120-130°C liegt eine Schmelze vor, die sich durch die verbesserte Wärmeübertragung auf das geschmolzene Material wesentlich schneller aufheizt. Beim weiteren Aufheizen unter kontinuierlichem Rühren entweicht bei geöffnetem Rührkessel ein wesentlicher Teil des zugegebenen Wassers. Der Rest des Wassers wird bei einem Sprühprozeß gemäß Beispiel 1 entfernt, wobei vergleichbare Korngrößen erhalten werden. Das Produkt wird mit etwa 0,5 % Antibackmittel versetzt und zur Herstellung von festen Treibstoffen verwendet. Auch hierbei konnten bei einem naßchemischen Nachweis keine Reste an nicht umgesetztem Nickelhydroxidcarbonat im Produkt gefunden werden.

Beispiel 3

Zur Herstellung eines Produktes gemäß Beispiel 2 werden lediglich 19,4 kg AN mit 2,0 kg Nickelhydroxidcarbonat und 1,2 l Wasser in einem Rührkessel aufgeheizt. Aufgrund des geringeren AN-Anteils schmilzt das Gemisch bereits bei etwa 90°C, so daß durch frühes Einschalten des Rührers die Aufheizung merklich beschleunigt wird. Im weiteren Verlauf des Aufheizens werden weitere 19,4 kg AN unter Aufrechterhaltung der Rührfähigkeit der Schmelze zugegeben. Nach Erreichen einer Temperatur von etwa 170°-180°C wird die Schmelze versprüht. Durch die allmähliche Zugabe des AN wird ein früheres Schmelzen und somit ein beschleunigtes Aufheizen erreicht, wodurch die Chargen um bis zu 40 % erhöht werden können und folglich die Wirtschaftlichkeit des Verfahrens entscheidend erhöht wird.

Beispiel 4

38,8 kg AN und 2,0 kg Nickelhydroxidcarbonat $NiCO_3 \cdot 2\ Ni(OH)_2$ werden gemischt und in einem Kessel aufgeheizt. Zur Schmelzpunkterniedrigung werden 0,2 kg Nickelnitrathexahydrat zugegeben. Bereits bei 130°C liegt eine rührfähige Schmelze vor, die sich durch die verbesserte Wärmeübertragung auf das geschmolzene Material schneller aufheizt. Beim weiteren Aufheizen unter kontinuierlichem Rühren entweicht bei geöffnetem Kessel wieder ein wesentlicher Teil des mit den Nickelverbindungen zugegebenen Wassers. Der Rest des Wassers wird bei einem Sprühprozeß gemäß Beispiel 1 entfernt, wobei vergleichbare Korngrößen des phasenstabilisierten AN erhalten werden. Das Produkt wird mit etwa 0,5 % Antibackmittel versetzt und zur Herstellung von festen Treibstoffen verwendet. Ein spurenanalytischer Nachweis auf Nickelhydroxidcarbonat ergab einen negativen Befund.

Beispiel 5

95g AN werden, beispielsweise in einem Ölbad, auf etwa 170°-180°C aufgeheizt und geschmolzen. Unter kontinuierlichem Rühren werden der Schmelze 6,9 g Zinkhydroxidcarbonat $Zn(OH)_2 \cdot ZnCO_3$ zugesetzt. Innerhalb weniger Sekunden beobachtet man einen vollständigen Umsatz des zugesetzten Zinksalzes zu einer klaren Schmelze. Die Mischung wird in einen Mörser gegossen und in heißem Zustand verrieben.

Beispiel 6

Zur Herstellung eines phasenstabilisierten Ammoniumnitrates mit einem hohen Anteil an Diamminkomplex, beispielsweise für den Einsatz in Gasgeneratoren oder Airbags, werden 3,2 kg AN mit 1,1 kg $Cu(OH)_2 \cdot CuCO_3$ in einem heizbaren Kneter bei etwa 140°C umgesetzt. Bei diesem Mengenverhältnis enthält das Gemisch nach vollständiger Reaktion gleiche molare Mengen an AN und Diamminkupfer(II). Zur Erniedrigung der Schmelztemperatur werden 100 g $Cu(NO_3)_2 \cdot 3\ H_2O$ zugesetzt. Nach 30 min wird die Temperatur abgesenkt, wobei die Schmelze bei laufendem Kneter zu einem kompakten, gut handhabbaren Produkt erstarrt.
Das Produkt wurde sowohl naßchemisch als auch röntgenspektrometrisch auf nicht umgesetzte Produkte an Kupferhydroxidcarbonat untersucht, wobei auch bei einer solchen hohen Zugabemenge kein negativer Befund erhalten wurde.

**Patentansprüche**

1. Verfahren zur Herstellung von phasenstabilisiertem, partikelförmigem Ammoniumnitrat (AN) durch Einbau eines Diamminkomplexes der Metalle Kupfer, Nickel oder Zink in das Kristallgitter des AN, wobei das AN mit anorganischen Kupfer-, Nickel- und/oder Zink-Verbindungen aufgeschmolzen und zur Umsetzung gebracht wird, **dadurch gekennzeichnet, daß** als anorganische Verbindungen der Metalle Cu, Ni und/oder Zn Carbonate und/oder Hydroxidcarbonate und/oder Hydroxide und/oder Hydroxidnitrate zugesetzt werden.

2. Verfahren nach Anspruch 1, **dadurch gekennzeichnet, daß** zweiwertige Carbonate, wie $CuCO_3$ und/oder $NiCO_3$ und/oder $ZnCO_3$ zugesetzt werden.

3. Verfahren nach Anspruch 1, **dadurch gekennzeichnet, daß** zweiwertige Hydroxidcarbonate, wie $Cu(OH)_2 \cdot CuCO_3$ und/oder $2\ Ni(OH)_2 \cdot NiCO_3 \cdot 4\ H_2O$ und/oder $Zn(OH)_2 \cdot ZnCO_3$, zugesetzt werden.

4. Verfahren nach Anspruch 1, **dadurch gekennzeichnet, daß** zweiwertige Hydroxide, wie $Cu(OH)_2$ und/oder $Ni(OH)_2$ und/oder $Zn(OH)_2$ zugesetzt werden.

5. Verfahren nach Anspruch 4, **dadurch gekennzeichnet, daß** zweiwertige Hydroxidnitrate, insbesondere $3\ Cu(OH)_2 \cdot Cu(NO_3)_2$ und/oder $Ni(OH)_2 \cdot Ni(NO_3)_2 \cdot 6\ H_2O$ und/oder $4\ Zn(OH)_2 \cdot Zn(NO_3)_2 \cdot 2\ H_2O$ zugesetzt werden.

6. Verfahren nach einem der Ansprüche 1 bis 5, **dadurch gekennzeichnet, daß** zur Erniedrigung der Schmelztemperatur des AN Additive zugesetzt werden.

7. Verfahren nach Anspruch 6, **dadurch gekennzeichnet, daß** als Additiv Wasser zugesetzt wird.

**8.** Verfahren nach Anspruch 6, **dadurch gekennzeichnet, daß** als Additive Metallnitrate zugesetzt werden.

**9.** Verfahren nach Anspruch 8, **dadurch gekennzeichnet, daß** als Additive Kupfernitrat und/oder Nickelnitrat und/oder Zinknitrat zugesetzt werden.

**Claims**

**1.** Method for producing phase-stabilised particulate ammonium nitrate (AN) by incorporation of a diammine complex of the metals copper, nickel or zinc in the crystal lattice of the AN, wherein the AN is melted with inorganic copper-, nickel- and/or zinc compounds and converted, **characterised in that** carbonates and/or hydroxide carbonates and/or hydroxides and/or hydroxide nitrates are added as inorganic compounds of the metals Cu, Ni and/or Zn.

**2.** Method according to claim 1, **characterised in that**
bivalent carbonates, such as $CuCO_3$ and/or $NiCO_3$ and/or $ZnCO_3$, are added.

**3.** Method according to claim 1, **characterised in that**
bivalent hydroxide carbonates, such as $Cu(OH)_2 \cdot CuCO_3$ and/or $2Ni(OH)_2 \cdot NiCO_3 \cdot 4H_2O$ and/or $Zn(OH)_2 \cdot ZnCO_3$, are added.

**4.** Method according to claim 1, **characterised in that**
bivalent hydroxides, such as $Cu(OH)_2$ and/or $Ni(OH)_2$ and/or $Zn(OH)_2$, are added.

**5.** Method according to claim 4, **characterised in that**
bivalent hydroxide nitrates, in particular $3Cu(OH)_2 \cdot Cu(NO_3)_2$ and/or $Ni(OH)_2 \cdot Ni(NO_3)_2 \cdot 6H_2O$ and/or $4Zn(OH)_2 \cdot Zn(NO_3)_2 \cdot 2H_2O$, are added.

**6.** Method according to one of the claims 1 to 5, **characterised in that**
additives are added in order to lower the melting temperature of the AN.

**7.** Method according to claim 6, **characterised in that**
water is added as additive.

**8.** Method according to claim 6, **characterised in that**
metal nitrates are added as additives.

**9.** Method according to claim 8, **characterised in that**
copper nitrate and/or nickel nitrate and/or zinc nitrate are added as additives.

**Revendications**

**1.** Procédé de préparation de nitrate d'ammonium (NA) en forme de particules, à phase stabilisée, par incorporation d'un complexe de diammine des métaux cuivre, nickel ou zinc dans le réseau cristallin du NA, dans lequel on fait fondre le NA avec des composés de cuivre, de nickel et/ ou de zinc inorganiques et l'on fait réagir,
**caractérisé en ce qu'**
on ajoute comme composés inorganiques des métaux Cu, Ni et/ou Zn des carbonates et/ou hydroxydes-carbonates et/ou hydroxydes et/ou hydroxydes-nitrates.

**2.** Procédé selon la revendication 1,
**caractérisé en ce qu'**
on ajoute des carbonates bivalents, comme $CuCO_3$ et/ou $NiCO_3$ et/ou $ZnCO_3$.

**3.** Procédé selon la revendication 1,
**caractérisé en ce qu'**
on ajoute des hydroxydes-carbonates bivalents, comme $Cu(OH)_2.CuCO_3$ et/ou $2 Ni(OH)_2.NiCO_3 4 H_2O$ et/ou $Zn(OH)_2.ZnCO_3$.

**4.** Procédé selon la revendication 1,
**caractérisé en ce qu'**
on ajoute des hydroxydes bivalents, comme $Cu(OH)_2$ et/ou $Ni(OH)_2$ et/ou $Zn(OH)_2$.

**5.** Procédé selon la revendication 4,
**caractérisé en ce qu'**
on ajoute des hydroxydes-nitrates bivalents, en particulier $3Cu(OH)_2.Cu(NO_3)_2$ et/ou $Ni(OH)_2.Ni(NO_3)_2$. 6 $H_2O$ et/ou 4 $Zn(OH)_2$. $Zn(NO_3)_2$. 2 $H_2O$.

**6.** Procédé selon l'une des revendications 1 à 5,
**caractérisé en ce qu'**
on ajoute des additifs pour abaisser la température de fusion du NA.

**7.** Procédé selon la revendication 6,
**caractérisé en ce qu'**
on ajoute de l'eau comme additif.

**8.** Procédé selon la revendication 6,
**caractérisé en ce qu'**
on ajoute des nitrates métalliques comme additifs.

**9.** Procédé selon la revendication 8,
**caractérisé en ce qu'**
on ajoute du nitrate de cuivre et/ou du nitrate de nickel et/ou du nitrate de zinc comme additifs.